(19) Europäisches Patentamt
European Patent Office
Office européen des brevets

(11) **EP 2 324 714 A1**

(12) **EUROPEAN PATENT APPLICATION**

(43) Date of publication:
25.05.2011 Bulletin 2011/21

(51) Int Cl.:
*A21D 8/00* (2006.01)      *A21D 8/02* (2006.01)
*A21D 6/00* (2006.01)      *A21D 15/02* (2006.01)

(21) Application number: 09173645.4

(22) Date of filing: 21.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: **Stichting Top Institute Food and Nutrition**
6709 PA Wageningen (NL)

(72) Inventors:
• **Hirte, Anita**
  3582KH, Utrecht (NL)
• **Meinders, Marcellinus Bernardus Johannes**
  6703 BW, Wageningen (NL)

(74) Representative: **Ketelaars, Maarten F.J.M.**
Nederlandsch Octrooibureau
J.W. Frisolaan 13
2517 JS Den Haag (NL)

(54) **Method for preparing a bread product and bread product thus obtained having a crispy crust**

(57)    The invention provides a method for preparing a bread product comprising (a) providing a frozen pre-baked bread product having a bread crumb and a bread crust, (b) creating a plurality of perforations through the bread crust of the frozen pre-baked bread product, and (c) optionally baking the product thus obtained. Such bread product may have a crispier crust and a better crispiness retention of the crust than a bread product without perforations in the crust.

Fig 1b

**Description**

**Field of the invention**

The invention relates to a method for preparing a bread product, and a bread product thus obtained.

**Background of the invention**

Methods of improving breads are known in the art. WO2005077192, for instance, describes a method of preparing a bread dough and a part baked bread comprising: (a) mixing flour, water and optionally other bakery ingredients to form a bread dough; (b) optionally part baking the dough to obtain a part baked bread; and (c) applying an enzyme material with proteolytic activity to the outside surface of the dough or the part baked bread. The bread dough and part baked bread obtained by the present method offer the advantage that they can be baked to yield a bread product that will retain a crispy crust for a considerable period of time alter baking.

US2007054025 describes a new dough having a reduced amount of shortening agents, salt and sugar, its preparation method and methods of using said dough in preparing baking goods, preferably bread. The obtained bread is healthy-friendly and has a crispy crust texture while its crumb is soft. It is assumed to be ideally excellent to be eaten as a healthy choice alone or in combination with other foods, such as a variety of cheeses, jams, fruits and meats.

CA2026695 describes fresh, baked bread products having extended shelf lives which are prepared specifically to be reheated/refreshed in a microwave oven employing a metalized film susceptor sleeve. Upon this microwave refreshening, the reheated loaves are characterized by a soft interior crumb and a crispy crust. The products have a shelf life of about 7-14 days. Also disclosed are methods for preparing such baked bread products as well as full formulation dry mixes and partial formulation pre-dry mixes for their commercial scale production by both the sponge dough and straight dough methods. The preparation methods involve first prehydrating a defined dough conditioner system and pregelatinized starch to form an emulsion, combining the emulsion with the other ingredients to form a dough and finish preparing the dough to produce a finished microwave baked bread loaf.

**Summary of the invention**

Prior art methods to provide baking products with a crispy crust are known. However, bread crispness may decrease within a few hours. Additives may be necessary to enhance crispness retention of the crust.

It is an aspect of the invention to provide a method for making bread with a crispy crust, which further preferably also retains crispiness over a long time, and which method preferably further obviates or reduces the use of additives required to improve crispness retention. It is further an aspect of the invention to provide a bread with a crust that is more crispy and/or retains its crispiness longer.

In a first aspect, the invention provides a method for preparing a bread product comprising

a) providing a, preferably frozen, preferably pre-baked, bread having a bread crumb (or pre-baked bread crumb) and a bread crust (or pre-baked bread crust);
b) creating a plurality of perforations through the crust of the (frozen) (pre-baked) bread ("puncturing");
c) optionally baking ("off-baking") the product thus obtained.

It advantageously appears that puncturing the food product changes water migration through the crust in such a way that a crispier crust may be obtained and/or a crust that has a relatively longer crispiness retention. The creation of perforations or channels in the crust of the bread after the first baking (pre-baking) seems to change the water uptake of the crust as well as to reduce condensation after cooling. Since water may migrate through the channels (perforations), less water may be retained in the crust, and the crust obtained after a final baking (off-baking) may be crispier and/or may retain its crispiness longer. Surprisingly, the crumb properties may not substantially be influenced. Hence, the method can be used to provide a bread product having a crispy crust, especially at least for about two days. Further, the method can be used to provide bread product having a prolonged crust crispiness retention.

It appears that good results are obtained when the pre-baked bread is in a frozen state. Hence, in an embodiment, the (pre-baked) bread is in a frozen state when puncturing. Especially, in an embodiment at least the crust region is in a frozen state. In yet another embodiment, the (pre-baked) bread is in a non-frozen state when puncturing.

The phrase "perforations through the crust" indicates that the crust is punctured or perforated. In the final bread (off-baked bread), in an embodiment the perforations also extend through the entire crust (i.e. thus into the crumb). Hence, there are a plurality of holes between the exterior of the crust and the crumb, *through* the crust.

After puncturing, the (frozen) pre-baked bread may be baked to provide a ready-to-eat bread product or may be stored (temporarily) (in a frozen state).

The term "bread product" may refer to any bread or bread product, such as a bread or a crispy roll. The term "bread" may refer for instance to white bread, brown bread, wholemeal bread, wheat germ bread, whole grain bread, multi-grain bread, kibbled bread, sourdough bread, granary bread, rye bread, fruit bread, raisin bread, (wal)nut bread, flat bread, hearth bread, French bread, baguette, peasant bread, boule, bagel, ciabatta, corn bread, cottage bread, Turkish bread, etc. Crispy rolls are sometimes also indicated as bread rolls. The term "bread" or "bread product" thus refers to a fully baked product. The terms "bread" or "bread product" does in an embodiment not refer to one or more of a croissant, a tortillia, puff pastry, pumpernickel, matzoh (or matza) and a bread stick, or a piece of dough suitable to one of the before mentioned products when baking according to a normal baking procedure for such products, respectively.

In a specific embodiment, the bread product has a specific volume of at least 2.5, preferably at least 3 1/kg, such as 2.5-8 1/kg, like 3-7 1/kg, for instance 3-61/kg. In a further embodiment, the bread product (and thus also in an embodiment the pre-baked bread product and the dough) contains gluten.

The term "pre-baked bread product" (or shortly pre-baked bread) relates to a dough that has been baked but has not been fully baked; a further baking is necessary to provide a fully baked bread product (that is ready to eat). An example of a pre-baked bread product is a parbaked bread product. Instead of the term "pre-baked bread product", also the term "pre-baked dough product" may be used. The term "pre-baked bread product" may also refer to a "parbaked bread product". In an embodiment, a bread or dough product is partially baked and then (rapidly) cooled and optionally frozen for storage. The raw dough may be baked as if normal, but halted at about 80% of the normal cooking time, and then it may be (rapidly) cooled and optionally frozen. The partial cooking may substantially kill the yeast (if available) in the bread mixture, and sets the internal structure of the proteins and starches (the spongy texture of the bread), so that it is now essentially cooked inside, but not so far as to have generated a "full crust". The crust of the pre-baked bread is herein also indicated as "pre-baked bread crust",

The term "crust" herein especially refers to the layer obtained after baking, that is coloured, and has darker colour than the bulk (i.e. crumb). The term "crust" herein may also refer to the layer obtained after baking, that is more dense, i.e. has a lower porosity than the bulk. Hence, the term "crust" especially refers to the layer obtained after baking that has a darker colour than the crumb, that is more dense than the crumb and that is in general more dry than the crumb. The crust (after final baking / baking off) in general has a thickness in the range of 0.5 - 10 mm, such as 0.5-5 mm, especially 0.5-2 mm. The term "crust" is also used for the external layer that is obtained after pre-baking. This crust is also indicated as "pre-baked bread crust").

In a specific embodiment, the method further comprises creating perforations through the (bread) crust having a mean effective diameter selected from the range of 0.01-4 mm, preferably 0.02-4 mm, even more preferably 0.05-1 mm. Smaller or larger diameters may not provide the advantages of the invention. Whatever the cross-section type of the perforation may be, the area of the cross-section can be determined, and therefrom the effective area, as would it be a circle, can be determined. For instance, a right triangular cross-section with two edges each 0.4 mm and one edge 0.57 mm (i.e. equilateral) or a rectangular having two edges 0.4 mm and two edges 0.2 mm, both creating an area of 0.08 mm$^2$, provide an effective diameter $D_{eff}$ of 0.32 mm ($D_{eff}=2*\sqrt{(A/\pi)}$), where A is the area. The effective diameter may vary from perforation to perforation, but is preferably selected from the herein indicated effective diameter range. Throughout the invention, the term effective diameter is used.

In a further embodiment, the method comprises creating perforations through the (bread) crust having a penetration depth of at least about 0.01 mm, especially at least 0.02 mm, especially at least 0.5 mm, even more especially at least 2 mm, such as at least 6 mm (or even larger). In an embodiment, the method comprises creating perforations through the (bread) crust having a penetration depth in the range of 0.01-10 mm, preferably 0.02-6 mm, even more preferably 0.1-4 mm, like at least 0.5 mm. In principle, the (pre-baked) bread product may be perforated fully, i.e. from one side to the other, but in general, the penetration depth will be in the range of about 0.1-10 mm, such as 2-6 mm, but deeper penetrations may be possible.

The crust may comprise a plurality of perforations. Preferably, the crust comprises at least 7 perforations, such as at least 9, like at least 16, such as at least 25 or at least 36, or at least 49, at least 64, etc. The perforations may be arranged regular or irregular, or a combination of one or more regular and one or more irregular arrangements may be applied. In general, the perforations may be arranged regular, which may provide the best properties with respect to crispiness and crispiness retention.

Part of the crust may be perforated, such as only a top part (especially in the case of tin-bake(d) bread, or the "entire" crust may be perforated. Preferably, at least 10 %, more preferably at least 20 %, such as the in an embodiment the whole top part of a bread, comprises perforations.

In a specific embodiment, the method involves creating perforations through the (bread) crust in the range of 0.1-50 perforations/cm$^2$ total area of the perforated crust, preferably 0.5-40 perforations/cm$^2$, even more preferably 1-20 perforations/cm$^2$, especially at least 2 perforations/cm$^2$ of area of the crust, such as 2-50 perforations/cm$^2$ total area of the crust. Hence, the entire outer surface of the bread may comprise per cm$^2$ of total area at least 0.1, such as at least 0.5 perforations. As mentioned above, the distribution of the perforations may be regular or irregular, or a combination thereof. Especially, the perforations are comprised by an upper part of the bread product, such as the top of a roll or a top of a tin-baked bread.

The perforations have a perforate area, i.e. the area of the opening at the surface of the crust. The cumulated area of all perforations is indicated as "total perforate area". The total perforate area can thus be defined as the sum of the areas of the perforation openings (based on the mean effective diameter). The term "total area of the crust" refers to the total area of the external surface. The term "total perforate area percentage" is the percentage of total perforate area relative to the total area of the crust. In an embodiment, the method comprises creating perforations to provide a total perforate area in the range of 0.1-10% relative to the area of the perforated crust (i.e. the total perforate area percentage relative to the total area of the crust is 0.1-10 %), preferably 0.5-10 %, even more preferably 0.7-5 %.

In an embodiment, the plurality of perforations in the bread crust of the (frozen) (pre-baked) bread product is created with a penetration device comprising, preferably a plurality of at least 4, such as at least 7, or such as at least 16, needles. For instance a device comprising 4-256 needles, like 7 or more, especially 9 to 256 needles, such as 16-256 needles, may be used, although also devices having more needles may be applied. In a specific embodiment, the method further comprises creating a plurality of at least 7 perforations, such as at least 16 perforations, through the bread crust of the (frozen) (pre-baked) bread product.

In an embodiment, the phrase "creating a plurality of perforations through the (pre-baked) bread crust" may include a multi-step process, wherein in a sequence of steps perforations are created in the crust. For instance, with a device comprising one or more needles, in a multi-step process, a plurality of perforations may be provided.

In a further aspect, the invention provides a pre-baked bread product having a bread crumb and a bread crust, wherein the bread crust comprises a plurality of perforations. Such pre-baked bread product is for instance obtainable by the herein described method, i.e. (a) providing a, preferably frozen, pre-baked bread having a pre-baked bread crumb and a pre-baked bread crust, and (b) creating a plurality of perforations through the crust of the frozen pre-baked bread. The pre-baked bread product may be frozen or non-frozen.

In a specific embodiment, the perforations have a mean effective diameter selected from the range of 0.01-4 mm, preferably 0.02-4 mm, even more preferably 0.05-1 mm. In yet a further specific embodiment, the perforations have a penetration depth of at least 0.01-10 mm, preferably 0.02-6 mm, even more preferably 0.1-4 mm. Especially, the penetration depth is at least 0.5 mm, such at least 2 mm, but may also be larger. Especially, the pre-baked bread comprises in the range of 0.1-50, preferably 0.5-40, even more preferably 1-20 perforations/cm$^2$ total area of the crust, especially at least 2 perforations/cm$^2$ total area of the crust, such as 2-50 perforations/cm$^2$ total area of the crust.

In a specific embodiment, the pre-baked bread product comprises a total perforate area in the range of 0.1-10%, preferably at least 0.2 %, preferably 0.5-10 %, even more preferably 0.7-5 %, relative to the total area of the crust. Smaller values may not have the desired impact, whereas larger values may, amongst others, influence to much the strength of the crust.

According to yet a further aspect, the invention provides a baked bread product ("off-baked") comprising a bread crust and a bread crumb, wherein the bread crust comprises a plurality of perforations, wherein the perforations preferably have a mean effective diameter selected from the range of 0.01-4 mm, preferably 0.02-4 mm, even more preferably 0.05-1 mm, and preferably have a penetration depth of at least 0.01 mm, preferably at least 0.1 mm. In an embodiment, the penetration depth is in the range of 0.01-10 mm, preferably 0.02-6 mm, especially at least 0.5 mm, even more especially at least 2 mm, or for instance 0.1-2 mm. In principle, the pre-baked bread product may be perforated fully, i.e. from one side to the other, but in general, the penetration depth will be in the range of about 0.1-10 mm, but deeper penetrations may be possible. In a specific embodiment, the baked bread product comprises in the range of 0.1-50, preferably 0.5-40, even more preferably 1-20, perforations/cm$^2$ total area of the baked bread product. The baked bread product may for instance comprise at least 7, such as at least 16, like 50 perforations. In a further embodiment, the baked bread product comprises a total perforate area in the range of 0.1-10% relative to the total area of the crust, such as at least 0.2%, preferably 0.5-10 %, even more preferably 0.7-5 %. Adjacent perforations may have a shortest distance in the range of 0.01-30 mm, preferably 0.02-20 mm, even more preferably 1-10 mm.

The perforations may be circular. Other possible shapes are square, rectangular, polygonal, like triangular, star like (pentagonal or hexagonal, etc.), etc. The perforations may be distributed regular or irregular, or a combination of both.

Especially preferred bread products are white bread, brown bread, wholemeal bread, wheat germ bread, whole grain bread, multi-grain bread.

The invention especially provides baked bread products with a crust having a water activity not larger than 0.85, preferably not larger than 0.8, such as 0.75 or smaller, like in the range of 0.35-80. The water activity is especially measured not earlier than 4 hours after cooling down of the bread from final bake. Crust with a higher water activity than 0.85 are considered not crispy anymore. The water activity of the crust can amongst others be controlled by controlling baking conditions and storage conditions.

Preferably, the dough based product is baked at a temperature of at least 160 °C, such as in the range of 160-450 °C, depending upon the type of bread and the baking time.

The invention further especially provides to a baked bread product having a crust having a water vapour permeability (WVP) of at least 4-15 $10^{-9}$ g/(m s Pa), especially at least 4.5 $10^{-9}$ g/(m s Pa), such as 4-12 $10^{-9}$ g/(m s Pa), like 5-10 $10^{-9}$ g/(m s Pa). The water vapour permeability is measured at 22 °C. For baked bread having a lower WVP, it may appear that crispiness and/or crispiness retention is not satisfactory. The invention especially provides a baked bread products having a crust having a WVP of at least 4-15 $10^{-9}$ g/(m s Pa), after storage at a relative humidity of 40%, 22°C for 0.5 to 48 hours after baking.

In another aspect, the invention provides a method for preparing a bread product comprising

a) providing a frozen dough product, selected from the group consisting of a frozen dough and a frozen baked off bread; and
b) creating a plurality of perforations through the surface of the frozen dough product ("puncturing").

Thereafter, the frozen dough may be baked or pre-baked, and the frozen baked off bread may be defrosted.

It advantageously appears that puncturing the food product changes water migration through the crust in such a way that a crispier crust may be obtained. The creation of perforated channels in the crust of the bread seems to change the water uptake of the crust. Since water may migrate through the channels (perforations), less water is retained in the crust, and the crust obtained after a final baking (off-baking) may be crispier and/or may retain its crispiness longer. Surprisingly, the crumb properties may not substantially be influenced. Hence, the method can be used to provide a bread product having a crispy crust. Further, the method can be used to provide bread product having a prolonged crust crispiness retention. The same dimensions and values as indicated above apply for this method and the product thus obtained.

In yet another aspect, the invention provides a method for preparing a bread product comprising

a) providing a dough product, selected from the group consisting of a pre-baked bread product, a frozen pre-baked bread product, a baked off bread, and a frozen baked off bread; and
b) creating a plurality of perforations through the surface of the dough product by using a laser beam.

In yet a further aspect, the perforations are only created over part of thickness of the crust, i.e. the perforations are not fully through the crust, but only extend from the external into part of the crust. For instance, the perforations may have a length of 0.005-0.2 mm, such as about 0.01 mm. Further, the same dimensions and values as indicated above apply for this method and the product thus obtained.

## Brief description of the drawings

Embodiments of the invention will now be described, by way of example only, with reference to the accompanying schematic drawings in which corresponding reference symbols indicate corresponding parts, and in which:

Figures 1a-1b schematically depict (in detail) a bread product. Note however that these schematic drawings may equally depict a pre-baked bread product;
Figure 2 schematically depict a stamp that can be used to perforate the crust at multiple sites;
Figure 3 schematically depicts a device for measuring the water vapour permeability of a piece of crust.
These drawings are not necessarily on scale.
Figures 4a-4b schematically depict a detail of a reference crust and a perforated crust of a bread product (baked off bread);
Figure 5 show the water content of the crust as function of the time for a reference crust and a perforated crust;
Figure 6 displays the crispiness of a reference crust and a perforated crust evaluated by sound measurements;
Figures 7a-7b show the water content of the crumb of a reference bread and bread with perforated crust as function of the time for a outer crumb (distance from crust 5.3 ±0.8 mm) and inner crumb (middle of bread);
Figure 8 depicts water penetration of the crust as function of the time for a reference crust and a perforated crust; and
Figure 9 schematically depicts an example how the total perforate area percentage can be calculated. This drawing is not necessarily on scale.

## Detailed description of the invention

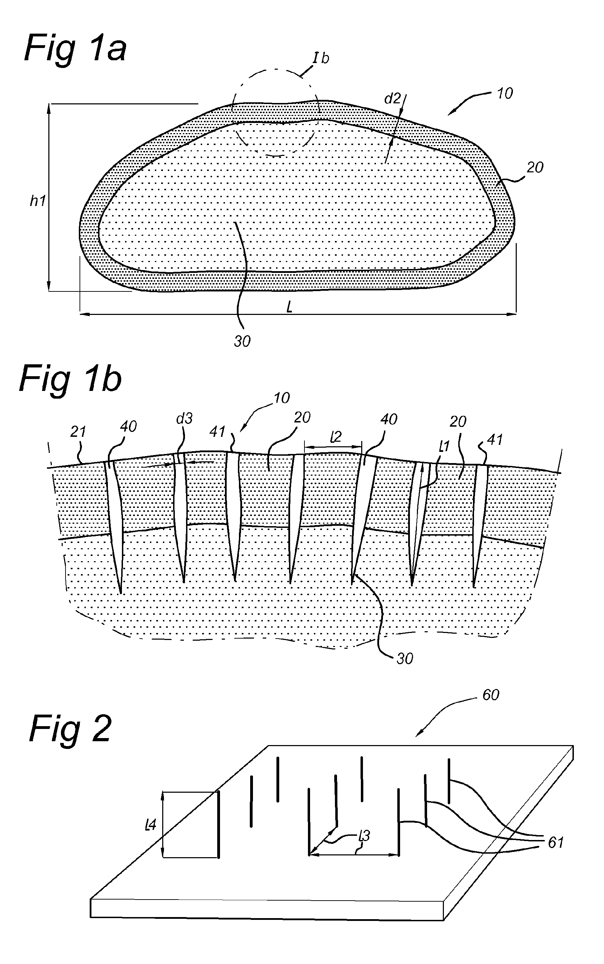

Figure 1a schematically depicts a bread product 10, such as a crispy roll. The bread product 10 comprises a crust 20 and a crumb 30. The crust 20 has a thickness d2, which may for instance be in the range of for instance about 0.5-2 mm. The bread product 10 may have dimensions which may depend upon the kind of bread product 10. Here the height of the bread product is indicated with reference h1, and the length of the bread product is indicated with L. The height h1 may for instance be in the range of 3-20 cm, and the length L of the bread product may be in the range of about 5-40 cm. However higher or thinner, longer or shorter bread products 10 may also be part of the invention. The total surface area of the bread product may by way of example be about 300 cm$^2$. A baguette may for instance have a length L1 of 40 cm, a height h1 of 3 cm and a widht of 7 cm, and have a total surface area of about 800 cm$^2$. A pistolet may for instance have the same height and width, but a length L1 of about 10 cm, and a total surface area of about 200 cm$^2$.

Part of the bread product 10 schematically depicted in figure 1a is schematically depicted in figure 1b as a detailed figure. In this figure part of the crust 20 and crumb 30 is depicted. As can be seen the crust 20 is perforated with channels or perforations 40. The perforations extend from the surface 21 of the crust 20 through the crust 20 into the crumb 30. The length or depth of the perforations is indicated with reference L1. The distance between adjacent perforations 40 is indicated with reference L2 (this distance is also indicated as shortest distance, and is the distance between the respective edges between two perforations 40). The perforations 40 have a diameter, or more precisely an effective diameter. The perforations 40 may have a circular cross-section, but also other types of cross-sections may be possible. The perforations may for instance also have a shape of slits, stars, etc. The perforations may in principle also have a square or rectangular cross-section. Whatever the cross-section type of the perforation 40 may be, the area of the cross-section can be determined, and therefrom the effective diameter, as would it be a circle, can be determined. This effective diameter is indicated with reference d3. The effective diameter is determined from the area of the cross-section of the perforation determined at the surface 21 of the crust 20, i.e. at the perforation opening (indicated with reference 41). Referring to figure 1a, the entire crust 20 may comprise perforations 40, but also part, such as the top part, may comprise perforations 40.

As schematically depicted in figure 1b, the perforations 40 may have a varying diameter, which varies over the length L1 of the perforation 40. This may especially be the case when needles are used to create the perforations 40 (see also below). Hence in stead of the effective diameter, a mean effective diameter is used. Herein, the term mean effective diameter refers to the effective diameter as average over the length L1 of the perforation 40.

Figures 1a and 1b are explained in relation to a bread product 10, but may equally well describe a pre-baked bread product. Hence, the crust 20 may refer to the crust of a baked bread product but also to the crust of a (frozen) pre-baked bread product.

Figure 2 schematically depicts a stamp 60, which can be used to provide perforations 40 in a (frozen) pre-baked dough product. This stamp 60 comprises needles 61, which needles may have a length L4 of at least about 0.05 mm. Preferably, the length L4 of the needles 61 is at least 0.1 mm, more preferably at least 0.5 mm, such as 2 mm or more. However, the needles 61 may also be much longer, like for instance 50 mm or 60 mm. The stamp 60 may be used to provide perforations 40 (in a pre-baked bread product) in a single step or by multiple applications. This may depend upon the size of the pre-baked bread product and the size of the stamp 60, as well as on the number of needles 61. A stamp 60 may for instance have at least 16 such as 64 needles 61. The distance between the needles 61 is indicated with reference L3, which may be in the same order as the distance between adjacent perforations. Note that the term needle may also be used for embodiments of devices having non-circular cross-sections.

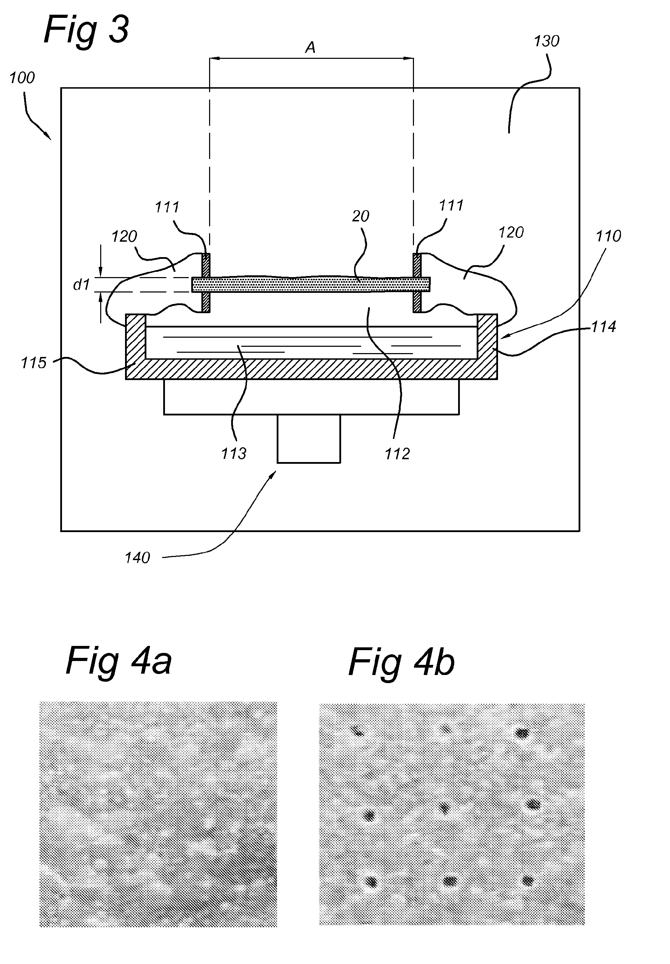

Figure 3 schematically depicts a water permeability measurement set up or apparatus 100. This set up 100 can be used to measure the water penetration through a crust piece, which crust piece has been removed from a baked bread product 10.

The apparatus 100 comprises a cell 110 comprising a liquid 113. The cell 110 is arranged on a balance 140. The crust 20 is arranged in a ring 111, which ring is arranged over the liquid 113. The crust 20 in the ring 111 is arranged in such a way over the liquid 113 that liquid 113 may only evaporate through the crust 20. In the schematic drawing 3 an embodiment is depicted wherein the ring 30 is arranged over the liquid 113 with a wax 120 which connects the ring 111 with an edge 114 of a holder 115 containing the liquid 113. In this way a cell interior 112 is provided, comprising the liquid 113 at a distance from crust 20. The atmosphere in the apparatus 100 is indicated with reference 130. This atmosphere 130 is controlled. The evaporation of the liquid 113 and escape through the crust 20 is determined by controlling the weight of the cell 110 with a balance 140. In this way the water vapor permeability of the crust 20 can be determined.

Hence, this invention provides a way to improve crispness as well as crispness retention by creating channels in the crust. The channels are made by puncturing the bread crust with for instance needles after the first baking step.

The breads are in an embodiment first pre-baked, then frozen, after that perforated and finally baked off. An advantage of puncturing the breads in a frozen state and before the second baking step is that the crust is still elastic, but not too elastic. Therefore the crust does not splitter during the perforate step and the crust does not simply deform.

The channels may in an embodiment have a diameter from 0.1 mm to 1 mm. The penetration depth may in an embodiment be between 100 $\mu$m and 2 cm.

With the method of the invention, a plurality of channels, such as at least 7, for instance 50-5000 channels can be created with a distance of for instance 1-10 mm. The channels may cause a different water uptake by the crust during cooling the bread and subsequent storage. Due to the lower water uptake by the crust its crispness may be increased after cooling of the bread and during further storage.

Hence, crispness of bread crusts may be improved after cooling the bread, crispness retention of the bread crust may be extended during further storage, and an improved shelf life of the bread may be obtained. The channels in the bread crust may be visible by eye. If a smaller diameter is used, it can be necessary to use a microscope.

**Examples**

**Example 1: crispiness**

Breads (crispy rolls) with and without channels in the crust were prepared. It was shown that the water uptake of the crust differs between both breads. Since the water content of the crust is related to the crispness, the lower water content of crust with channels indicates a higher crispiness (for crispiness, see also Luyten, H.; Plijter, J.J.; Van Vliet, T. (2004) Crispy / crunchy crusts of cellular solid foods: A literature review with discussion. Journal of Texture Studies 35, 445 - 492). Sensory evaluation of crispness of the breads by a lab panel showed a difference in initial crispness and crispness retention between both types of bread.

Standard breads were prepared at the TNO baking laboratory (TNO Food and Nutrition, Zeist, The Netherlands). Wheat flour (Salvia, purchased from Meneba Meel BV, Rotterdam, The Netherlands; 3000 g), water (1779 ml), dry yeast (50 g), salt (70 g) and ascorbic acid (20 ppm) were mixed in a mixer (Kemper SP 15, Kemper, The Netherlands) for 1 min at low speed (140 rpm). All ingredients (at 5°C), except water and ascorbic acid, were blended. Afterwards water (at 10 °C) and ascorbic acid were added and mixed at low speed for 2 min. Then, the dough was kneaded at high speed (280 rpm) until a final dough temperature of 26°C. After mixing, the dough was allowed to rest for 15 min and was then divided and rounded. Proofing was performed at 30°C and 80 % RH until a fixed volume of gas was produced (700 ml) in a SJA Fermentograph (Franken, Goes, The Netherlands). The breads were part-baked at 180°C during 10 min and 75°C dew point in a Becker oven (Becker BV, Nederweert, The Netherlands). The part-baked breads were allowed to cool to room temperature for 30 min, frozen at -30°C and stored at -18°C until use.

Crispy rolls were prepared with conventional methods, including a prebaking step. A frozen pre-baked crispy roll was perforated with a stamp with 100 needles ("device"), having diameters of 0.62 mm, lengths of about 1 cm, and shortest distances in the range of 2.38 mm (centre to centre distance is about 3 mm). Breads were baked off in a Bakermat Mastermind oven (Leventi, Gilze, The Netherlands), pre-heated at 250°C, for 5 minutes at 235°C. Afterwards pictures of the breads were made.

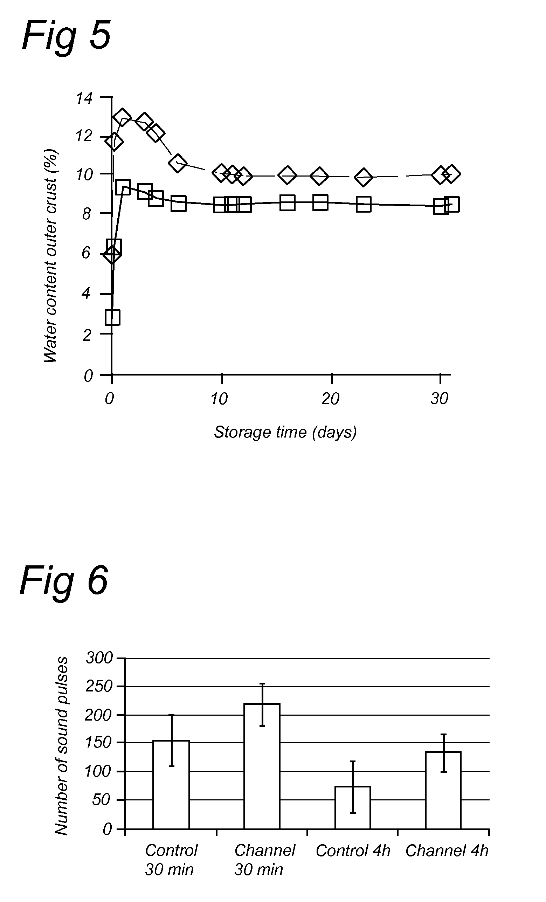

Figures 4a-4b show the crust of a reference bread (Fig 4a) and a bread according to the invention (Fig 4b). In the diagram of figure 5, the water uptake of the crust is illustrated as function of the time. It is known that the water content of the crust is related to the loss of crispness. Since the water uptake is substantially lower in the bread with channels (□) than in the reference bread crust (0), crispness retention will also be increased to a large extend. The values were obtained with NIR measurements (A near-infrared reflectance moisture meter KJT-100 hand-held model (Kett U.S., CA, USA) was used). In the next diagram, figure 6, the results of the instrumental evaluation of crispness are shown. The sound during fracture of the two bread kinds was analyzed and the number of sound pulses was determined. It is known from literature that the number of sound events correlates with the crispness of the product. Since the number of sound events is significant higher for the breads with channels both after 30 minutes and 4 hours after storage (relative humidity 40 %, 22°C), the crispness and crispness retention is increased.

Sound measurements are known in the art, and are for instance described in C. Primo-Martin et al, Effect of water activity on fracture and acoustic characteristics of a crust model. Journal of Food Engineering 90 (2009) 277-284 and Castro-Prada, E.M.; Primo-Martin, C.; Meinders, M.B.J.; Hamer, R.J.; Van Vliet, T. (2009) Relationship between water activity, deformation speed, and crispness characterization. Journal of Texture Studies 40, 127 - 156. Mechanical and acoustic characteristics of the crust were simultaneously measured during fracturing of the roll with a texture analyser (TA-XT Plus, Stable Micro Systems Ltd., Surrey, UK) in an isolated chamber. The top of the roll was vertically fractured with a speed of 20 mm/s using a cuboid probe (thickness 1 mm, width 10 mm). Simultaneously the emitted sound was recorded at a distance of 7 mm using a free field microphone (4189 Deltatron Falcon free field microphone with pre-amplifier 2671, Brüel & Kjær, Nærum, Denmark). Data were digitized and analysed as described by Primo-Martin et al (2009) 277-284. This analysis involved a characterization of individual events in the acoustic emission within the first 0.4 seconds after the device contacted the roll. First the number of sound pulses with a sound intensity higher than the threshold of 62 dB was counted. Then, the energy of all pulses was calculated and divided by the time span of 0.4 seconds. This value was expressed as total pulse energy.

**Example 2: puncturing dough, non-frozen pre-baked bread and bread**

The aim of these comparative examples was to study the feasibility of other settings to perforate the crust in comparison to preferred settings:

1. Perforate dough
2. Perforate baked-off bread
3. Perforate not-frozen pre-baked bread

The following methods were applied: (1) preparation of dough; perforate dough with device (Figure 2) or by hand with single needle; perforate at the beginning, in the middle and at the end of proving, (2) bake off bread, perforate (with device or needle), and (3) thawing pre-baked bread, perforate with device or a single needle

It appears that puncturing of dough relatively is not a successful way to create channels in baked breads. When using the device: a low penetration depth of device is obtained, since the dough is elastic. The surface is more deformed than perforated.

When puncturing at the beginning of proving (device and single needle), the channels are closed after baking. Due to the elasticity of the dough, the channels close during proving and baking. Dots on the surface are still visible, but the channels are not open anymore.

When a puncturing at the end of proving, the channels are better visible than the channels that were created at the beginning of proving. But still they are not open after baking. Furthermore, the puncturing at a late state of proving destroys the shape of the bread. The bread is very soft and airy at that state, so that the dough collapse to a certain extend when getting perforated.

It appears not to be substantially possible to perforate crust of baked-off breads with needles. The crust of baked-off breads is very brittle, so that many cracks occur on the surface. The channels are not separated anymore, since cracks between them appear. It is not possible to create breads with a homogeneous crust pervaded with channels.

It appears not to be substantially possible to create a uniform perforated crust when puncturing defrosted par-baked bread. It appears not to be substantially possible to create channels on the surface, if the whole device is used for puncturing. The parbaked bread is very elastic. Therefore the needles do not penetrate into the crust. The crust is just deformed, but not perforated. The crust (of the final bread) has cracks. It appears not to be substantially possible to create a uniform perforated crust when puncturing the bread just with one needle. Cracks occur between the perforated points, since the crust is slightly brittle.

Hence, it seems advantageous to perforate the breads in a frozen state to create a uniform crust with separated channels.

**Example 3: influence on the crumb**

It was studied whether the crumb of breads with channels is drier than the crumb of breads without channels. The following method was applied: (1) storage of breads with and without channels, and (2) determination of water content (slicing of breads from the top). The water content of the middle of each slice was determined.

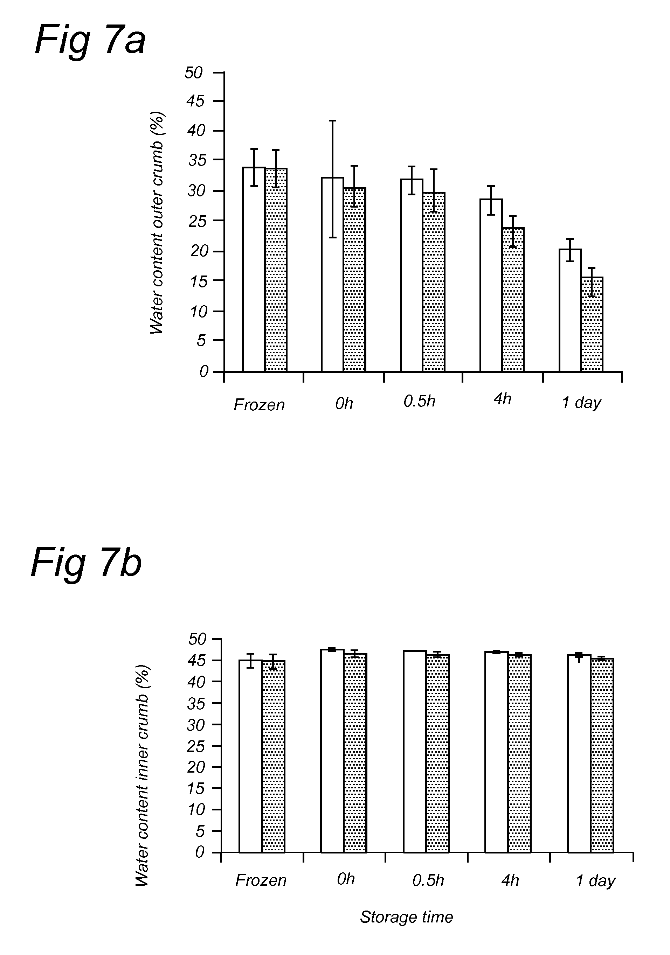

It was found that after 0.5 hour storage the water content of breads with and without channels are almost the same. Just in about the first two millimetres under the crust slight differences may be observed. It was further found that after 4 hours storage the water content of the crumb of the breads with and without channels are also almost the same. Just in the first few millimetres under the crust slight differences are perceived. The results are shown in figures 7a-7b. In these diagrams, the water content of slices at different storage times (7a) outer crumb (distance from bread crust 5.3 $\pm$ 0.8 mm; thus still below the crust) (7b) inner crumb (middle of bread) are shown. The white bars refer to the control breads, the dotted bars to the perforated breads, respectively.

Hence, the water content of the crumb of breads with channels is almost the same like the water content of breads without channels. Just the crumb close to the crust is slightly drier when the crust contains channels.

**Example 4: water permeability of the crust**

The measurement of water vapor permeability (WVP) is well established for films. An example is found in the paper by Chien-HSien Chen et al., Food Hydrocolloids 22 (2008) 1584-1595. ASTM (2000b), method E96, is followed with some modification; see also figure 3.

Here, a piece of crust 20 is removed from a bread product and sealed with wax (paraffin.) 120 in a ring 111 on a cup/cell 110. The thickness of the piece of crust in the ring 111 was 1-1.15 mm. The crust 20 within the ring 111 is free from wax and has an area A. The relative humidity is adjusted under and over the cup and the weight loss is measured. Sealing is performed with wax, whereas the sealing of films in the art is mostly done with screws and pressure, but this sealing is not possible for crust, since crust is more brittle and thicker.

The liquid used is a saturated salt solution in water, providing a water vapor thereabove having a water activity $a_w$ of 0.85. The relative humidity over the crust is 40%.

The formula is to calculate the water vapor permeability:

$$WVP=G*x/A*dP$$

Herein:

G - weight loss per time (for example 68.2 mg/10h)
x - thickness (approximately 1.2 mm)
A - Area (approximately 206 mm$^2$)
dP - partial pressure difference (1430Pa)

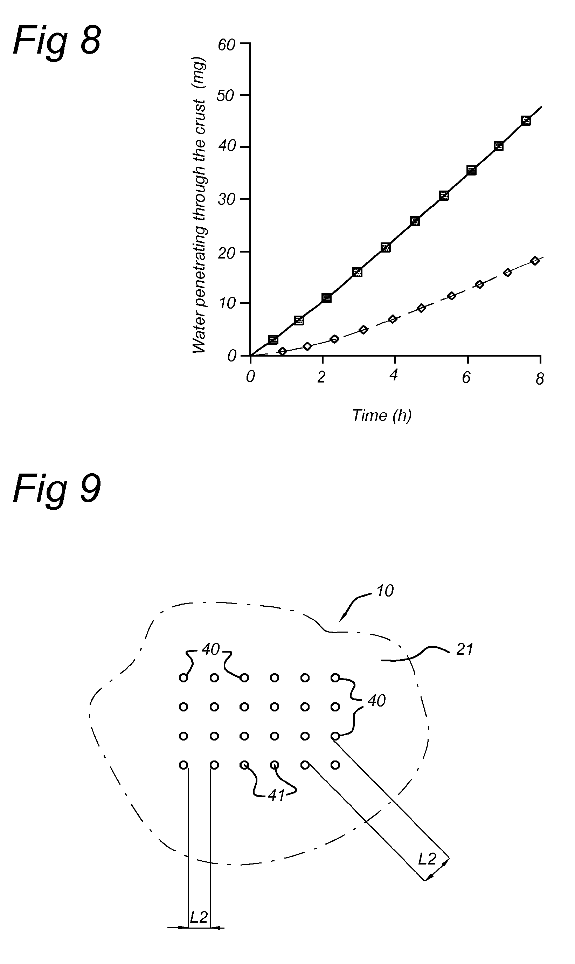

Results are obtained which are displayed in figure 8 and the table below:

Table: Water Vapour Permeability (WVP), initial time and water content (measured after 43 h measurement) of isolated control crust, isolated channel crust and metal plate.

|  | Water Vapour Permeability ($10^{-9}$ g/(m s Pa)) (22 °C) |
| --- | --- |
| Control | 3.5 ± 0.3 |
| Channel | 6.6 ± 0.9 |
| Metal Plate | 0 ± 0 |

In figure 8, the water penetration through the crust as function of the time is displayed for standard crust (0) and a perforated crust (□). Hence, Significant differences between permeability and initial time of crust with channels and without channels

Further measurements, also on other types of bread, confirm that the WVP of the bread crust of the invention with channels (i.e. perforations in the crust), is higher than of state of the art bread crusts.

Thus, for permeability it was found that there are significant differences between permeability and initial time of crust with channels and without channels. Further, with respect to the water uptake of the crust it seems that there is less water uptake of crust with channels and less retention of water in crust. There are only minor, no significant, differences in water content of crumb; no drying out of crumb is observed. Advantageously, there is an improvement of crispness and crispness retention when breads are perforated

**Example 5: evaluation of the (total) perforate area and area of the perforated crust**

Figure 9 is used to further explain the definition of (total) perforate area and perforate area percentage of the crust. Assume a bread product 10, such as a bread roll, having a part of the crust 20 comprising perforations 40. The total area of the perforations 40 at the openings 41 (i.e. at the surface 21 of the crust 20) is determined by accumulating the areas of the individual perforations 40 (at openings 41). The value obtained is the total perforate area. The percentage of total perforate area relative to the total area of the crust (for instance 300 cm$^2$) can be calculated (for instance 0.75 %).

The terms "corresponding" and "respectively" are used to indicate a predominantly one-to-one relationship between a first item and a second item. E.g. "each imaging lens of the plurality of imaging lenses is arranged to image a corresponding segment pattern of the plurality of segment patterns into a respective projection image of a plurality of projection images" has to be understood in the sense that one of the imaging lenses is arranged to image predominantly one specific segment pattern into one specific projection image, whereas another one of the imaging lenses is arranged to image predominantly one other specific segment pattern into one other specific projection image.

Unless indicated otherwise, and where applicable and technically feasible, the phrase "selected from the group consisting" a number of elements may also refer to a combination of two or more of the enumerated elements.

The term "substantially" herein, such as in "substantially flat" or in "substantially consists", etc., will be understood by the person skilled in the art. In embodiments the adjective substantially may be removed. Where applicable, the term "substantially" may also include embodiments with "entirely", "completely", "all", etc. Where applicable, the term "substantially" may also relate to 90% or higher, such as 95% or higher, especially 99% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The term "and/or" includes any and all combinations of one or more of the associated listed items. The article "a" or "an" preceding an element does not exclude the presence of a plurality of such elements. The article "the" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A method for preparing a bread product comprising:

    a) providing a frozen pre-baked bread product having a bread crumb and a bread crust;
    b) creating a plurality of perforations through the bread crust of the frozen pre-baked bread product;
    c) optionally baking the product thus obtained.

2. The method according to claim 1, wherein the perforations have a penetration depth of at least 0.5 mm, preferably at least 2 mm.

3. The method according to any one of the preceding claims, comprising creating perforations through the bread crust in the range of 0.5-40 perforations/cm$^2$ total area of the bread crust, and providing a total perforate area in the range of 0.5-10 % relative to the total area of the crust.

4. The method according to any one of the preceding claims, comprising creating a plurality of at least 7 perforations through the bread crust of the frozen pre-baked bread product.

5. A pre-baked bread product having a bread crumb and a bread crust, wherein the bread crust comprises a plurality of perforations, preferably at least 7, more preferably at least 16.

6. The pre-baked bread product according to claim 5, wherein the perforations have a penetration depth of at least 0.5 mm, preferably at least 2 mm, and wherein the perforations preferably have a mean effective diameter selected from the range of 0.02-4 mm.

7. The pre-baked bread product according to any one of claims 5-6, comprising in the range of 0.5-40 perforations/cm$^2$ of total area of the crust.

8. The pre-baked bread product according to any one of claims 5-7, comprising a total perforate area in the range of 0.5-10 % relative to the total area of the crust.

9. A baked bread product comprising a bread crust and a bread crumb, wherein the bread crust comprises a plurality of perforations, at least 7, more preferably at least 16, wherein the perforations have a penetration depth of at least 0.5 mm, preferably at least 2 mm.

10. The baked bread product according to claim 9, comprising in the range of 0.5-40 perforations/cm$^2$ total area of the bread crust.

11. The baked bread product according to any one of claims 9-10, comprising a total perforate area in the range of 0.5-10 % relative to the total area of the crust.

12. The baked bread product according to any one of claims 9-11, wherein adjacent perforations have a shortest distance in the range of 0.02-20 mm.

**13.** The baked bread product according to any one of claims 9-12, wherein the crust has a water activity of $\leq 0.8$ and a water vapour permeability of at least .5 $10^{-11}$ g/(m s Pa).

**14.** Use of a method according to any one of claims 1-4 to provide a bread product having a crispy crust for at least 2 days.

**15.** Use of a method according to any one of claims 1-4 to provide bread product having a prolonged crust crispiness retention.

*Fig 1a*

*Fig 1b*

*Fig 2*

## Fig 3

## Fig 4a

## Fig 4b

## Fig 5

## Fig 6

## Fig 7a

## Fig 7b

*Fig 8*

*Fig 9*

Europäisches
Patentamt

European
Patent Office

Office européen
des brevets

# EUROPEAN SEARCH REPORT

**Application Number**

EP 09 17 3645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 563 737 A2 (KRAFT FOODS HOLDINGS INC [US]) 17 August 2005 (2005-08-17)<br>* claims 1-2,5,11-14, 18-23, 25-30 *<br>* paragraph [0004] - paragraph [0006] *<br>----- | 5-15 | INV.<br>A21D8/00<br>A21D8/02<br>A21D6/00<br>A21D15/02 |
| X | JP 2006 304735 A (NISSHIN FLOUR MILLING INC) 9 November 2006 (2006-11-09)<br>* abstract *<br>* paragraph [0006] - paragraph [0012] *<br>----- | 5-15 | |
| A | PRIMO-MARTIN C ET AL: "Effect of structure in the sensory characterization of the crispness of toasted rusk roll" FOOD RESEARCH INTERNATIONAL, ELSEVIER APPLIED SCIENCE, BARKING, GB, vol. 41, no. 5, 1 January 2008 (2008-01-01), pages 480-486, XP022696084 ISSN: 0963-9969 [retrieved on 2008-02-29] * the whole document *<br>----- | 1-15 | |
| A | VAN NIEUWENHUIJZEN N H ET AL: "Water content or water activity: What rules crispy behavior in bread crust?" JOURNAL OF AGRICULTURAL AND FOOD CHEMISTRY, vol. 56, no. 15, August 2008 (2008-08), pages 6432-6438, XP002572611 ISSN: 0021-8561 * the whole document *<br>----- | 1-15 | TECHNICAL FIELDS SEARCHED (IPC)<br><br>A21D |

The present search report has been drawn up for all claims

| Place of search | Date of completion of the search | Examiner |
|---|---|---|
| Munich | 11 March 2010 | Heirbaut, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

**EP 2 324 714 A1**

## ANNEX TO THE EUROPEAN SEARCH REPORT
## ON EUROPEAN PATENT APPLICATION NO.

EP 09 17 3645

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2010

| Patent document cited in search report | | Publication date | Patent family member(s) | | Publication date |
|---|---|---|---|---|---|
| EP 1563737 | A2 | 17-08-2005 | CA<br>US | 2496501 A1<br>2005175738 A1 | 10-08-2005<br>11-08-2005 |
| JP 2006304735 | A | 09-11-2006 | NONE | | |

EPO FORM P0459

For more details about this annex : see Official Journal of the European Patent Office, No. 12/82

18

## REFERENCES CITED IN THE DESCRIPTION

### Patent documents cited in the description

- WO 2005077192 A
- US 2007054025 A

- CA 2026695

### Non-patent literature cited in the description

- Crispy / crunchy crusts of cellular solid foods: A literature review with discussion. **Luyten, H. ; Plijter, J.J. ; Van Vliet, T.** Journal of Texture Studies. 2004, vol. 35, 445-492
- **C. Primo-Martin et al.** Effect of water activity on fracture and acoustic characteristics of a crust model. *Journal of Food Engineering,* 2009, vol. 90, 277-284

- **Castro-Prada, E.M. ; Primo-Martin, C. ; Meinders, M.B.J. ; Hamer, R.J. ; Van Vliet, T.** Relationship between water activity, deformation speed, and crispness characterization. *Journal of Texture Studies,* 2009, vol. 40, 127-156
- **Chien-HSien Chen et al.** *Food Hydrocolloids,* 2008, vol. 22, 1584-1595